# EUROPEAN PATENT APPLICATION

(11) **EP 4 321 392 A1**
(43) Date of publication of application: **14.02.2024**
(21) Application number: 22784668.0
(22) Date of filing: 04.04.2022
(51) Int. Cl.: B60R 19/18, B32B 15/08, F16F 15/02

(54) **COMPOSITE, AUTOMOTIVE COMPONENT, COMPOSITE UNIT, AND METHOD FOR PRODUCING COMPOSITE**

(30) Priority: 06.04.2021 JP 2021064768
(71) Applicant: NIPPON STEEL CORPORATION, Chiyoda-ku Tokyo 100-8071 (JP)
(72) Inventor: KANO, Kyohei, Tokyo 100-8071 (JP); IBARAGI, Masaharu, Tokyo 100-8071 (JP); NEGI, Noriyuki, Tokyo 100-8071 (JP)
(74) Representative: Vossius & Partner Patentanwälte Rechtsanwälte mbB
(86) International application number: PCT/JP2022/017062
(87) International publication number: WO 2022/215686

(57) **Abstract**

A composite consisting of a metal member and a vibration damping material, wherein the occurrence of poor appearance when the temperature rises is suppressed. The composite of the present disclosure includes a first metal member, a second metal member, and a vibration damping material excluding fiber-reinforced plastics. The vibration damping material is arranged in at least a part of a portion where the first metal member and the second metal member overlap and is sandwiched between the first metal member and the second metal member, and there is no bonding between at least one of the first metal member and the second metal member and the vibration damping material.

## Description

### FIELD

The present disclosure relates to a composite, an automobile part, a composite unit, and a method for the production of a composite.

### BACKGROUND

Various metal members are used as parts of transportation equipment such as automobiles, railway vehicles, ships, and aircraft. Since transportation equipment generates sound and vibration due to various factors, vibration damping performance is often required for metal members used in transportation equipment.

When it is desired that a metal member exhibit vibration damping performance, it is common to combine the metal member with a vibration damping material. Such a vibration damping material has substantially no self-adhesion to the metal member. Thus, in the prior art, when combining a metal member and a vibration damping material, the metal member and the vibration damping material are bonded together by an adhesive, mechanical fastening, or the like (Patent Literature 1 and 2).

Though not related to vibration damping materials, there is also known a technique of bonding a metal member and a fiber-reinforced plastic via an adhesive when combining the metal member and the fiber reinforced plastic (Patent Literature 3 to 6).

### [CITATION LIST]

### [PATENT LITERATURE]

[PTL 1] WO 2015/129394
[PTL 2] Japanese Unexamined PCT Publication No. 2013-535030
[PTL 3] WO 2018/124215
[PTL 4] Japanese Unexamined Patent Publication No. 2019-119212
[PTL 5] Japanese Unexamined Patent Publication No. 2019-119213
[PTL 6] Japanese Unexamined Patent Publication No. 2013-159019

### SUMMARY

### [TECHNICAL PROBLEM]

According to the findings of the present inventors, a composite in which a metal member and a vibration damping material are bonded together via an adhesive or the like has the following problems. Specifically, since the metal member and the vibration damping material have different coefficients of linear expansion, when the temperature rises, misfitting of thermal expansion coefficients between the metal member and the vibration damping material causes internal stresses and thermal strain in composite. In a composite in which a metal member and a vibration damping material are bonded together via an adhesive or the like, the thermal strain described above tends to cause appearance defects (surface distortion) such as unevenness and wrinkles on the surface of the metal member. Thus, in conventional composite bodies, there is room for improvement in terms of suppressing the occurrence of appearance defects when the temperature rises.

### [SOLUTION TO PROBLEM]

As a means for solving the above problems, the present disclosure provides:
a composite, comprising:
a first metal member,
a second metal member, and
a vibration damping material excluding fiber-reinforced plastics, wherein
the vibration damping material is arranged in at least a part of a portion where the first metal member and the second metal member overlap and is sandwiched between the first metal member and the second metal member, and
at least one of the first metal member and the second metal member is not bonded to the vibration damping material.

The composite of the present disclosure may comprise an intermediate member,
the intermediate member may be arranged between at least one of the first metal member and the second metal member and the vibration damping material, and
the vibration damping material may be sandwiched between the first metal member and the second metal member via the intermediate member.

In the composite of the present disclosure, the intermediate member may be composed of at least one selected from a metal material, a plastic material, a rubber material, a foam material, and a leaf spring.

In the composite of the present disclosure, the vibration damping material may be composed of at least one selected from a resin, a rubber material, a plastic material, and a foam material.

In the composite of the present disclosure, the vibration damping material may be solid, and a static friction coefficient of the vibration damping material may be 0.30 or more.

In the composite of the present disclosure, the vibration damping material may be solid, and a loss coefficient of the vibration damping material at 25 °C may be 0.01 or more.

In the composite of the present disclosure, the vibration damping material may be solid, and a storage modulus of the vibration damping material at 25 °C may be 1.0 × 10⁵ MPa or less.

In the composite of the present disclosure, the vibration damping material may be liquid, and a viscosity of the vibration damping material at 25 °C may be 100 mPa·s or more.

In the composite of the present disclosure, the first metal member and the second metal member may be steel.

In the composite of the present disclosure, in portions where the vibration damping material is not arranged, the first metal member and the second metal member may be bonded together.

In the composite of the present disclosure, the first metal member and the second metal member may be bonded together by mechanical fastening, adhesion, welding, or a combination thereof.

In the composite of the present disclosure, the interface between at least one of the first metal member and the second metal member and the vibration damping material may be not bonded.

In the composite of the present disclosure, a ratio A2/A1 of a projected area A2 of the vibration damping material relative to a projected area A1 of the entire overlapping portion of the first metal member and the second metal member may be 0.05 or more and 1.00 or less.

As a means for solving the above problems, the present disclosure provides:
an automobile part comprising the above composite of the present disclosure.

In the automobile part of the present disclosure, at least one of the first metal member and the second metal member may be an inner or reinforcement part of an automobile.

As a means for solving the above problems, the present disclosure provides:
a composite unit used for the above composite boy of the present disclosure, comprising:
a first metal member, and
a vibration damping material excluding fiber-reinforced plastics, wherein
the vibration damping material is arranged on at least one side of the first metal member.

The composite unit of the present disclosure may comprise an intermediate member,
the intermediate member may be arranged between the first metal member and the vibration damping material and on at least a part of a surface of the first metal member, and
the intermediate member may be composed of at least one selected from a metal material, a plastic material, a rubber material, a foam material, and a leaf spring.

In the composite unit of the present disclosure, the first metal member may be used as an inner or reinforcement part of an automobile.

In the composite unit of the present disclosure, the first metal member may be steel.

As a means for solving the above problems, the present disclosure provides:
a method for the production of the above composite of the present disclosure, the method comprising:
a first step wherein a vibration damping material is arranged on at least one side of a first metal member to form a composite unit, and
a second step wherein the vibration damping material of the composite unit is pressed against a second metal member, wherein
in the second step, the vibration damping material is sandwiched between the first metal member and the second metal member so that the vibration damping material is arranged in a portion where the first metal member and the second metal member overlap, and the composite unit and the second metal member are combined without bonding between at least one of the first metal member and the second metal member and the vibration damping material.

In the method for the production of a composite of the present disclosure, the first step may comprise arranging an intermediate member on a surface of the first metal member and arranging the vibration damping material on the intermediate member, and
the intermediate member may be composed of at least one selected from a metal material, a plastic material, a rubber material, a foam material, and a leaf spring.

In the method for the production of a composite of the present disclosure, the second step may comprise arranging an intermediate member between the second metal member and the vibration damping material, and thereafter pressing the vibration damping material of the composite unit against a surface of the second metal member via the intermediate member, and
the intermediate member may be composed of at least one selected from a metal material, a plastic material, a rubber material, a foam material, and a leaf spring.

In the method for the production of a composite of the present disclosure, the intermediate member may be composed of a foam material.

In the method for the production of a composite of the present disclosure, the first metal member and the second metal member may be steel.

In the method for the production of a composite of the present disclosure, the second step may comprise bonding the first metal member and the second metal member by mechanical fastening, adhesion, welding, or a combination thereof in a portion where the vibration damping material is not arranged.

In the method for the production of a composite of the present disclosure, the second step may comprise pressing the vibration damping material of the composite unit against the second metal member, and thereafter bonding the first metal member and the second metal member.

### [EFFECTS]

According to the technology of the present disclosure, on the side where the metal member and the vibration damping material are not bonded, the occurrence of internal stresses due to the difference in coefficient of linear expansion between the metal member and the vibration damping material is easily suppressed. Thus, for example, even when the temperature rises, the surface of the metal member is unlikely to undergo surface distortion. As a result, the occurrence of poor appearance when the temperature rises can be suppressed.

### BRIEF DESCRIPTION OF DRAWINGS

FIG. 1 schematically shows an example of a cross-sectional configuration of a composite without intermediate members, and which is a composite in which flat metal members are used.
FIG. 2 schematically shows an example of a cross-sectional configuration of a composite without intermediate members, and which is a composite in which a hat-like metal member is used.
FIG. 3 schematically shows an example of a cross-sectional configuration of a composite which has an intermediate member, and which is a composite in which a hat-shaped metal material is used as the intermediate member.
FIG. 4 schematically shows an example of a cross-sectional configuration of a composite which has an intermediate member, and which is a composite in which a plastic material, rubber material, and/or foam material is used as the intermediate member.
FIG. 5 schematically shows an example of a cross-sectional configuration of a composite which has an intermediate member, and which is a composite in which a leaf spring is used as the intermediate member.
FIG. 6 schematically shows an example of a cross-sectional configuration of a composite which has a plurality of intermediate members.
FIG. 7 shows the method for measuring the static friction coefficient of a vibration damping material.
FIG. 8 schematically shows an example of the shape of a sample the decay time of which was measured.
FIG. 9 shows the flow of the hanging impact vibration method.

### DESCRIPTION OF EMBODIMENTS

### 1. Composite of Prior Art

In composite bodies of the prior art, an adhesive layer is provided between the metal member and the vibration damping material to bond the metal member and the vibration damping material together. In this case, for example, when the temperature of the composite rises, internal stress is generated due to mismatch of the thermal expansion coefficients of the metal member and the vibration damping material. Due to the occurrence of internal stress, the adhesive layer is destroyed, whereby the metal member and the vibration damping material are deformed, and appearance defects (these are sometimes collectively referred to as "surface distortion") such as unevenness and wrinkles are likely to occur in the appearance of the composite. In such a case, the properties as a composite may be deteriorated, and for example, there is a risk that strength and rigidity may be reduced. When an adhesive is used to form the composite, a strong and highly durable adhesive is required to maintain the shape of the composite, which causes an increase in cost. In some cases, there may be no adhesives which can ensure sufficient adhesion. When attempting to bond a metal member and a vibration damping material via an adhesive, generally, since a coating process, a heat curing process, and/or a curing process are required, there is concern that the time and cost required to produce the composite and products using the same will increase. Furthermore, it may be difficult to incorporate the adhesive application process or the like into an existing production line (for example, a production line for automobile members) due to the time and costs involved in the process. Similar concerns exist when the metal member and vibration damping material are bonded by means other than an adhesive.

### 2. Composite of Present Disclosure

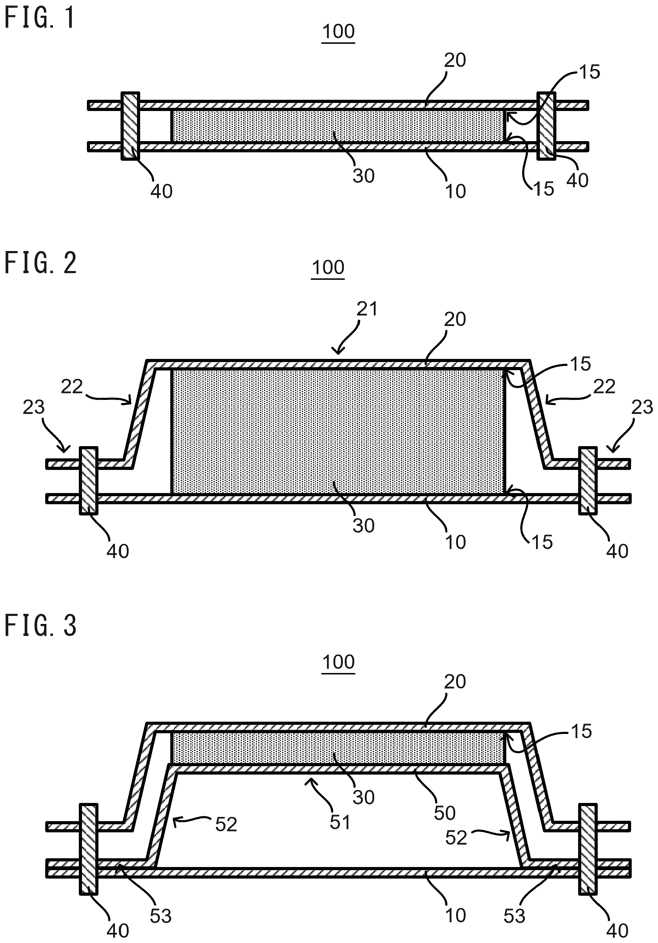

In order to solve the problems of the composite of the prior art described above, the composite of the present disclosure adopts the following configuration. FIGS. 1 to 6 show an example of the configuration of the composite of the present disclosure. As illustrated in FIGS. 1 to 6, the composite 100 of the present disclosure comprises a first metal member 10, a second metal member 20, and a vibration damping material 30 excluding fiber-reinforced plastics. The vibration damping material 30 is arranged at least a part of the portion where the first metal member 10 and the second metal member 20 overlap, and is sandwiched between the first metal member 10 and the second metal member 20. In the composite of the present disclosure, at least one of the first metal member 10 and the second metal member 20 is not bonded to the vibration damping material 30.

### 2.1 Metal Members

The optimum materials and shapes of the first metal member and the second metal member can be determined in accordance with the application of the composite.

### 2.1.1 Materials of Metal Members

The materials of the first metal member and the second metal member are not particularly limited, and examples thereof include iron, titanium, aluminum, magnesium, and alloys thereof. Examples of the alloys include iron-based alloys (including stainless steel), Ti-based alloys, Al-based alloys, and Mg alloys. The metal members are each preferably a sheet-like material (for example, a steel sheet).

From the viewpoint of strength and workability, the metal members may be steel. The steel which can be used is not particularly limited, and examples thereof include the steels standardized by the Japanese Industrial Standards (JIS), as well as carbon steel, alloy steel, high-tensile steel, which are used for general structures and machine structures. The components of the steel are not particularly limited, and the steel may contain, in addition to Fe and C, one or two or more of Mn, Si, P, Al, N, Cr, Mo, Ni, Cu, Ca, Mg, Ce, Hf, La, Zr, and Sb. For example, the steel may have a composition containing C, Si, Mn, P, S, Al, and N, with the balance of iron and impurities. The first metal member and the second metal member may be made of the same material or different materials, but are preferably made of the same material from the viewpoint of workability. For example, both the first metal member and the second metal member may be steel.

When the metal member is steel, the steel may be subjected to an optional surface treatment. Examples of the surface treatment include, but not limited to, various plating processes such as galvanizing (hot-dip galvanizing, electro-galvanizing, etc.) and aluminum plating, chemical conversion treatments such as chromate treatment and non-chromate treatment, and surface roughening treatments such as sandblasting and other physical surface roughening treatments and chemical etching and other chemical surface roughening treatments. Furthermore, plate alloying or a plurality of types of surface treatments may be applied. As the surface treatment, it is preferable that a treatment for the purpose of imparting at least rust resistance be performed.

### 2.1.2 Shapes of Metal Members

The shapes of the metal members are also not particularly limited, and can be appropriately determined in accordance with application. The metal members may have a sheet-like portion (a flat portion, a curved portion, a bent portion, or the like, which can be regarded as having a sheet-like shape before molding). When the metal member has a sheet-like portion, the thickness of the sheet-like portion is not particularly limited, and from the viewpoint of the strength and workability of the composite, it may be, for example, 0.1 mm or more and 3.5 mm or less. The thickness of the sheet-like portion of the first metal member and the thickness of the sheet-like portion of the second metal member may be the same or different. The first metal member and the second metal member may have the same shape or different shapes.

### 2.2 Vibration Damping Material

Any vibration damping material may be used as long as it exhibits vibration damping performance when combined with a metal member. However, with regard to fiber-reinforced plastics, the anisotropy of the fibers may change the direction in which the vibration damping performance is likely to manifest, and there is a risk that stable vibration damping performance cannot be obtained. In this regard, fiber-reinforced plastics are excluded from the vibration damping material of the present application. In the composite of the present disclosure, by adopting a material other than fiber-reinforced plastic as the vibration damping material, stable vibration damping performance can be exhibited without being influenced by fiber orientation or fiber content.

### 2.2.1 Material of Vibration Damping Material

The material of the vibration damping material is not particularly limited unless it is a fiber-reinforced plastic, and the vibration damping material may be composed of, for example, at least one selected from a resin, rubber material, plastic material, and foam material. Specific examples of vibration damping material include acrylonitrile-acrylic rubber-styrene copolymers, acrylonitrile-butadiene-styrene copolymers, acrylonitrile-chlorinated polyethylene-styrene copolymers, acrylonitrile-ethylene propylene rubber-styrene copolymers, acrylonitrile styrene copolymers, (poly)butadiene rubber, chloroprene rubber, diallyl phthalate, dicyclopentadiene, ethylene-chlorotrifluoroethylene copolymers, ethylene-ethyl acrylate copolymers, epoxy resins, ethylene-propylene-diene terpolymers, ethylene-tetrafluoroethylene copolymers, ethylene-vinyl acetate copolymers, ethylene-vinyl alcohol copolymers, tetrafluoroethylene-hexafluoropropylene copolymers, ionomer resins, liquid crystal polymers (collective term for macromolecules exhibiting liquid crystal structure), methyl methacrylate-butadiene-styrene copolymers, melamine formaldehyde (melamine resins), natural rubber, polyamide (general term for polymer compounds with acid amide bonds such as nylon), polyamideimide, polyacrylonitrile, polyarylate, polybenzimidazole, polybutylene naphthalate, polybutylene terephthalate, polycarbonate, polychlorotrifluoroethylene, polyethylene, high density polyethylene, low density polyethylene, linear low density polyethylene, ultra-high molecular weight polyethylene, polyether ether ketone, polyether imide, polyethylene naphthalate, polyether sulfone, polyethylene terephthalate, phenolic resins, tetrafluoroethylene-perfluoroalkyl vinyl ether copolymers, polyimide (wholly aromatic polyimide), polymethyl methacrylate (acrylic), polymethylpentene polymer, polyoxymethylene (polyacetal), polypropylene, polyphthalamide, polyphenylene ether, polyphenylene oxide, polyphenylene sulfide, polyphenylsulfone, polystyrene, general-purpose polystyrene, impact-resistant polystyrene, polysulfone, polytetrafluorochloroethylene, polytetrafluoroethylene, polyurethane, polyvinyl alcohol, (poly)vinyl acetate, polyvinyl butyral, polyvinyl chloride, chlorinated polyvinyl chloride, polyvinylidene chloride, polyvinylidene fluoride, polyvinyl fluoride, acrylonitrile styrene copolymers, styrene butadiene rubber, styrene butadiene styrene block copolymers, styrene ethylene butylene styrene block copolymers, silicone, sheet molding compounds, syndiotactic polypropylene, syndiotactic polystyrene (crystalline polystyrene), thermoplastic elastomers, thermoplastic polyurethane, polymethylpentene (TPX polymer: trade name of Mitsui Chemicals, Inc.), urea resins (urea-formaldehyde resins), unsaturated polyester, and natural resins (rosin esters).

Furthermore, as described above, the vibration damping material may be a foam material. "Foam material" means a material having a large number of fine pores or voids. The foam material is desirably a material which rebounds (restores) when compressed. Specific examples thereof include low-resilience urethane materials, foamed urethane materials, foamed EVA materials, urethane foam, and ethylene propylene rubber.

### 2.2.2 Shape of Vibration Damping Material

The shape of the vibration damping material as a whole is not particularly limited, and an optimum shape can be selected in accordance with the shape of the metal members described above. For example, the vibration damping material may be a sheet or layer. Alternatively, the vibration damping material may be a material of an amorphous shape. As will be described later, the vibration damping material is arranged in at least a part of the portion where the first metal member and the second metal member overlap (the projected portion where the two metal members overlap when viewed from the direction perpendicular to the surface of one metal member). The ratio (A2/A1) of the projected area A2 of the vibration damping material relative to the projected area A1 of the entire overlapping portion of the first metal member and the second metal member may be, for example, 0.05 or more, 0.10 or more, 0.15 or more, 0.20 or more, 0.25 or more, 0.30 or more, 0.35 or more, 0.40 or more, 0.45 or more, or 0.50 or more, and may be 1.00 or less, 0.95 or less, 0.90 or less, 0.85 or less, 0.80 or less, 0.75 or less, or 0.70 or less.

### 2.2.3 Static Friction Coefficient of Vibration Damping Material

The vibration damping material may be solid or liquid as long as it exhibits vibration damping performance. When the vibration damping material is solid, the static friction coefficient of the vibration damping material may be 0.30 or more. When the static friction coefficient of the vibration damping material is large, the vibration damping material can easily be held between and combined with the first metal member and the second metal member, whereby the vibration damping performance of the composite can easily be improved. The static friction coefficient of the vibration damping material may be 0.40 or more, 0.50 or more, or 1.00 or more. The upper limit of the static friction coefficient is not particularly limited, and may be, for example, 100 or less, 50 or less, 20 or less, or 10 or less.

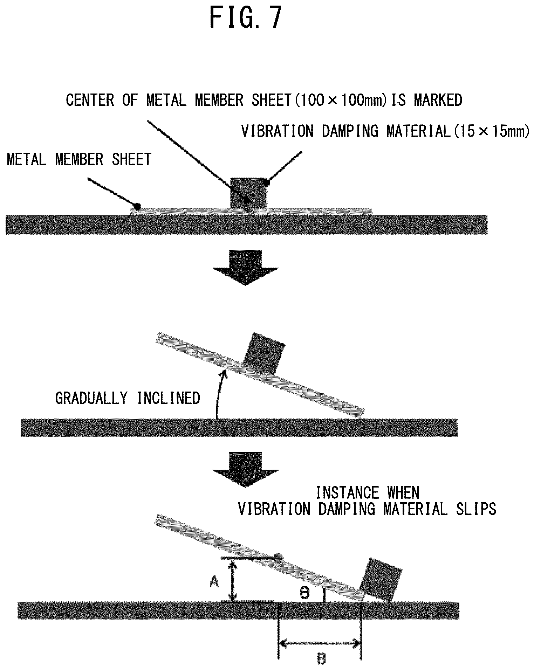

The "static friction coefficient" of the vibration damping material is measured by the procedure shown in FIG. 7. Specifically, a 100 × 100 mm metal member sheet (degreased with acetone) is placed on a horizontal surface (for example, on a desk), the vibration damping material cut to 15 × 15 mm with a Heiwa Technica 32F-300 high-speed cutting machine is placed in the center of the metal member sheet, and while keeping one end of the metal member on the horizontal surface, the other end is raised to gradually incline (tilt) the metal member sheet. The static friction coefficient µ is obtained by measuring the angle θ at the instant when the vibration damping material slips and calculating the tangent of that angle. The static friction coefficient can also be calculated by calculating the A/B at the instant the vibration damping material slips, as shown in FIG. 7. The "metal member" used when measuring the static friction coefficient is composed of substantially the same material as the metal member forming the composite and has substantially the same surface properties. When the first metal member and the second metal member are composed of different materials, the static friction coefficient of the vibration damping material for each metal member is measured and the average value is taken.

### 2.2.4 Loss Coefficient of Vibration Damping Material

When the vibration damping material is solid, the vibration damping material may have a loss coefficient of 0.01 or more at 25 °C. When the loss coefficient of the vibration damping material is large, high vibration damping performance is likely to be exhibited. The loss coefficient of the vibration damping material may be 0.03 or more, 0.05 or more, or 0.10 or more. The upper limit of the loss coefficient is not particularly limited, and may be, for example, 1.0 or less or 10 or less.

The method for measuring the "loss coefficient" of the vibration damping material is as follows. Specifically, the loss coefficient tan δ at 25 °C of each vibration damping material is measured using a dynamic viscoelasticity measuring device (DMA7100 manufactured by Hitachi High-Tech Science).

### 2.2.5 Storage Modulus of Vibration Damping Material

When the vibration damping material is solid, the storage modulus of the vibration damping material at 25 °C may be 1.0 × 10⁵ MPa or less. When the storage modulus of the vibration damping material is small, high vibration damping performance is likely to be exhibited. The storage modulus of the vibration damping material may be 1.0 × 10⁴ MPa or less, or 1.0 × 10³ MPa or less. The lower limit of the storage modulus is not particularly limited, and may be, for example, 1 MPa or more or 10 MPa or more.

The method for measuring the "storage modulus" of the vibration damping material is as follows. Specifically, the storage modulus E' of each vibration damping material at 25 °C is measured using a dynamic viscoelasticity measuring device (DMA7100 manufactured by Hitachi High-Tech Science Co., Ltd.).

### 2.2.6 Viscosity of Vibration Damping Material

When the vibration damping material is liquid, the viscosity of the vibration damping material at 25 °C may be 100 mPa·s or more. When the viscosity of the vibration damping material is high, the vibration damping material can easily be held between and combined with the first metal member and the second metal member, whereby the vibration damping performance of the composite can easily be improved. The viscosity of the vibration damping material at 25 °C may be 1000 mPa·s or more. The upper limit of the viscosity is not particularly limited, and may be, for example, 1000 Pa·s or less or 100 Pa·s or less.

The method for measuring the "viscosity" of the vibration damping material is as follows. Specifically, the viscosity of the vibration damping material at 25 °C is measured using an E-type cone plate viscosimeter (manufactured by Toki Sangyo Co., Ltd.: RE80H). The value after 60 seconds from the start of measurement is taken as the value of viscosity.

### 2.3 Arrangement of Metal Members and Vibration Damping Material

The composite of the present disclosure is produced by interposing the vibration damping material between the two metal members without bonding the vibration damping material to at least one of the two metal members. As a result, there is substantially no constraint in the in-plane direction at the interface between the vibration damping material and the metal member to which the vibration damping material is not bonded, whereby internal stress is less likely to occur at the interface, and the desired vibration damping properties are exhibited while suppressing the occurrence of surface distortion. For example, the vibration damping material is in non-bonded contact with at least one of the first metal member and the second metal member, the occurrence of surface distortion in the contacting portion whereby can be suppressed, and sufficient vibration damping properties can be secured.

In the composite of the present disclosure, the vibration damping material is arranged in at least part of the portion where the first metal member and the second metal member overlap. The "portion where the first metal member and the second metal member overlap" refers to a projected portion where two metal members overlap when viewed from a direction perpendicular to the surface of one metal member. The vibration damping material may be arranged in all or a part of the portion where the first metal member and the second metal member overlap. When both the first metal member and the second metal member have a sheet-like portion, the vibration damping material may be arranged so as to be sandwiched between the sheet-like portion of the first metal member and the sheet-like portion of the second metal member, or may be arranged so that it is sandwiched between portions other than the sheet-like portions. As will be described later, when bonding the first metal member and the second metal member, it is preferable that they be bonded at a portion where the vibration damping material is not arranged. In order to achieve this, the vibration damping material is desirably arranged only in part of the overlapping portion of the first metal member and the second metal member, and in other words, desirably, there is a portion where the vibration damping material is not arranged in the portion where the first metal member and the second metal member overlap.

In the composite of the present disclosure, only one vibration damping material may be arranged between the first metal member and the second metal member, or a plurality of vibration damping materials may be arranged. For example, in the composite of the present disclosure, a plurality of vibration damping materials may be stacked in the interposing direction between the metal member and the vibration damping material (the stacking direction of the metal member and the vibration damping material), or a plurality of vibration damping materials may be arranged in a direction intersecting the interposing direction (the direction of the interface between the metal member and the vibration damping material).

### 2.4 Presence or Absence of Bond Between Metal Member and Vibration Damping Material

In the composite of the present disclosure, it is important that there at least one of the first metal member and the second metal member not be bonded to the vibration damping material. As used herein, "bond" is a general term for adhesion, fusing, welding, or mechanical fastening, and means a state in which a vibration damping material and a metal member are restrained at least in the planar direction at the interface therebetween. Specifically, in the composite of the present disclosure, there are no layers which contribute to bonding between the vibration damping material and the metal member, such as an adhesive layer, at the interface between the vibration damping material and at least one of the metal members. By being sandwiched between two metal members, the vibration damping material is pressed against at least one of the metal members. At this time, a pressing force is generated between the vibration damping material and the metal member in a direction crossing the interface. As a result, a pseudo-composite state can be secured while suppressing constraint in the planar direction at the interface between the vibration damping material and the metal member. When the composite of the present disclosure is in a pseudo-composite state as described above, even if the temperature rises, the metal member and the vibration damping material can move freely in the planar direction, whereby internal stress is less likely to occur.

Though the details are not clear, when the vibration damping material is pressed against the metal member, it is believed that frictional force acts at the interface between the vibration damping material and the metal member, whereby a large static frictional force works favorably for vibration damping. Even if the static friction force is large, the metal member and the vibration damping material are not constrained to each other in the planar direction, can move freely in the planar direction, and are unlikely to generate internal stress and substantially do not generate planar distortion.

In the metal member that is not bonded to the vibration damping material, as described above, since the generation of internal stress is suppressed, surface distortion is less likely to occur. Thus, when applying the composite of the present disclosure to an automobile part, the member facing the outside of the automobile is desirably composed of a metal member that is not bonded to the vibration damping material, as described later. Conversely, the metal member facing the interior of the automobile may or may not be bonded to the vibration damping material. The applications of the composite of the present disclosure will be separately described later.

In the composite of the present disclosure, the vibration damping material may not be bonded to both the first metal member and the second metal member. This is because the composite is often placed under the same temperature environment as a single part, and it is often desired to suppress the occurrence of internal stress between both metal members and the vibration damping material. In this case, in order to improve handling during production of the composite, the vibration damping material and one of the two metal members may be lightly adhered or lightly affixed to the extent that they do not separate during production. The terms "lightly adhered" and "lightly affixed" as used herein refer to adhesion and affixation without using an adhesive to the extent that each member can be peeled off from the other without being destroyed. Examples thereof include adhesion by the viscosity of a liquid.

### 2.5 Bonding between Metal Members

As illustrated in FIGS. 1 to 6, the first metal member 10 and the second metal member 20 may be bonded together via a bond part (affixation member 40). When the metal members are bonded together, the pressing force acting between the vibration damping material and the metal member is easily maintained. However, if both metal members are bonded together in a portion where the vibration damping material is arranged, the vibration damping material will be bonded to the metal members. As a result, the vibration damping material is restrained by both metal members and cannot relax the internal stress of the composite. Thus, when the first metal member and the second metal member are bonded together, the first metal member and the second metal member are bonded together desirably in portions where the vibration damping material is not arranged. Specifically, when viewed in a direction perpendicular to the surface of one metal member, the first metal member and the second metal member can be bonded together in the region where the vibration damping material is not arranged. In this case, the first metal member and the second metal member may be bonded together by mechanical fastening (rivets, bolts and nuts, etc.), adhesion (adhesive, etc.), welding (arc welding, spot welding, laser welding, etc.), or a combination thereof. However, the use of an adhesive may increase process costs (for example, costs related to coating, heat curing, curing processes, etc.). From the viewpoint of suppressing an increase in cost, the method of bonding the first metal member and the second metal member may be mechanical fastening, welding, or a combination thereof.

A composite having the above configuration can be obtained, for example, by arranging the vibration damping material on the first metal member and pressing it against the second metal member to combine (affix the vibration damping material between the metal members), whereby the production process is very simple, production cost can be greatly reduced, and the existing production line can be used. The method for producing the composite will be described separately later.

### 2.6 Intermediate Member

As illustrated in FIGS. 3 to 6, the composite 100 of the present disclosure may comprise an intermediate member 50 in addition to the first metal member 10, the second metal member 20, and the vibration damping material 30. As illustrated in FIGS. 3 to 6, the intermediate member 50 may be arranged between at least one of first metal member 10 and second metal member 20 and vibration damping material 30, and the vibration damping material 30 may be sandwiched between the first metal member 10 and the second metal member 20 via the intermediate member 50. In this case, the vibration damping material 30 and the intermediate member 50 may or may not be bonded via an adhesive or the like. Furthermore, among the surfaces of the vibration damping material 30, the surface opposite the intermediate member 50 (the side not in contact with the intermediate member 50) may be in contact with the first metal member 10 or the second metal member 20, and in this case, it is preferable that the area (i.e., the interface between the vibration damping material 30 and the metal member 10 or 20) between the vibration damping material 30 and the first metal member 10 or the second metal member 20 with which the vibration damping material 30 is in contact not be bonded. In other words, when the vibration damping material 30 has a first surface that contacts the intermediate member 50 and a second surface that contacts the first metal member 10 or the second metal member 20, although the first surface may or may not be bonded to the intermediate member 50, the second surface is preferably not bonded to the first metal member 10 or the second metal member 20.

The function of the intermediate member in the composite is not particularly limited. For example, the intermediate member may be arranged and sandwiched between one metal member and the vibration damping material and compressed in the interposing direction to generate a force (restoring force) to press the vibration damping material against the other metal member. The material of the intermediate member is also not particularly limited. For example, the intermediate member may be composed of at least one selected from a metal material, plastic material, rubber material, foam material, and leaf spring. The metal material may be appropriately selected from those exemplified as the material which can constitute the metal member, or may be selected from other metal materials. Furthermore, the plastic material, rubber material and foam material may be appropriately selected from those exemplified as the material which can constitute the above vibration damping material, or may also be selected from other plastic materials, rubber materials or foam materials. The material and shape of the leaf spring are determined so that the above-described pressing force can be exerted in the composite. In the composite of the present disclosure, the intermediate member itself may exhibit vibration damping performance. Specifically, when the composite has a plurality of vibration damping materials, at least one vibration damping material can also function as the intermediate member.

The foam material, which is responsible for the pressing force described above, refers to a material having a large number of fine pores or voids. The type of foam material is not particularly limited as long as it rebounds (restores) when compressed. Specific examples of the foam material include low-resilience urethane materials, foamed urethane materials, foamed EVA materials, urethane foam, and ethylene propylene rubber. The foaming ratio of the foam material affects the pressing load of the vibration damping material against the metal member. Thus, the foaming ratio of the foam material can be selected in accordance with the application of the composite. The foaming rate is preferably small to exert a strong elastic force, since generally, the higher the pressing load, the better the resulting composite state and the more excellent the vibration damping property.

In the automobile production process, when arranging a soft vibration damping material such as rubber on a metal member, the stability of the vibration damping material is poor. In this case, by arranging the vibration damping material on an intermediate member having a stable shape, the vibration damping material can easily be arranged at the desired position of the metal member without deforming the shape. Specifically, the function of the intermediate member is not limited to the above function as the pressing member, and may be, for example, a function of improving the handleability of the vibration damping material in the production process of the composite of the present disclosure or a product comprising thereof.

The intermediate member may have an electrolytic corrosion prevention function. A lubricant such as grease or wax may be applied as the intermediate member between the metal member and the vibration damping material.

### 2.7 Pressing Load

Whether or not the vibration damping material is pressed against the metal member may be determined as follows. Specifically, a cross-sectional view of the formed composite is observed with an optical microscope (observation by cutting in the lamination direction of vibration damping material and metal members), and the thickness of the vibration damping material between the metal members and the thickness of the intermediate member (length in the stacking direction) are measured. The measured thicknesses are compared with the respective thicknesses of the members in the free state (i.e., the uncompressed state), and if there is a difference (thickness in free state - thickness in composite) in thickness (thickness in free state > thickness in composite), it is determined that the vibration damping material is pressed against the metal member. The difference between the thickness in the free state and the thickness in the composite is preferably 1% or more and more preferably 2% or more of the thickness in the free state.

The specific procedure for determining whether or not there is a pressing load on the composite is, for example, as follows. Specifically, the total thickness of the vibration damping material and the intermediate member is measured at five points in the state of the composite, and the average value is calculated as the average thickness A. After separating into individual members, the thicknesses of the vibration damping material and the intermediate member are each measured at five points to calculate the average value. The average thickness B is calculated by totaling the average values of the vibration damping material and the intermediate member. If there is a substantial difference between average thickness A and average thickness B (average thickness B > average thickness A), it can be determined that the vibration damping material is pressed against the metal member.

The pressing load may be measured as follows. First, the thicknesses of the metal members, the vibration damping material, and the intermediate member, if present, in the composite state are recorded. The composite is then dissembled and a thin pressure sensor is inserted between the metal member and the vibration damping material in an un-composited state, pressure is applied until the vibration damping material reaches the thickness of the composite, and the amount of load applied is measured. Regarding the method of applying pressure, a hydraulic machine, a device such as a vise or a clamp, or another method may be used. It should be noted that the "pressing load" can be measured at any position between the first metal member and the second metal member. Specifically, the position where the pressing load is measured may be between the intermediate member and the vibration damping material, in addition to between the intermediate member or the vibration damping material and the metal member. Examples of the thin pressure sensor that can measure the pressing load include a pressure-sensitive measuring device using CKS18L-F manufactured by Canon Kasei Co., Ltd., and an I-Scan system manufactured by Tactile using a thin pressure sensor manufactured by Tekscan. A thinner sensor is preferable, and a sensor with a thickness of 0.1 to 0.2 mm is preferably used. Regarding the number of measurement points, it is desirable to select and measure five or more evenly spaced points in the part.

The magnitude of the pressing load is not particularly limited, and may be appropriately adjusted in accordance with the application. For example, from the viewpoint of suitable combination of the metal members and vibration damping material, the average of the measured values of the pressing load may be, for example, 0.01 kg/cm² or more, 0.10 kg/cm² or more, or 0.20 kg/cm² or more. The upper limit of the pressing load can be determined in accordance with the strength and thickness of the metal member used at that time.

### 2.8 Specific Example of Composite

A specific example of the composite will be described with reference to FIGS. 1 to 6. In FIGS. 1 to 6, for convenience of explanation, there is illustrated an aspect in which when the temperature rises, the occurrence of surface distortion of the second metal member 20 is suppressed to suppress the appearance defects thereof and the second metal member 20 and the vibration damping material 30 are not bonded to each other. However, the aspect of the composite is not limited thereto, and may be an aspect in which when the temperature rises, the occurrence of surface distortion of the first metal member 10 is suppressed to suppress the appearance defects thereof and the first metal member 10 and the vibration damping material 30 are not bonded to each other, or an aspect in which when the temperature rises, the occurrence of surface distortion of both the first metal member 10 and the second metal member 20 is suppressed to suppress the appearance defects thereof, the first metal member 10 and the vibration damping material 30 are not bonded to each other, and the second metal member 20 and the vibration damping material 30 are not bonded to each other.

The composite 100 shown in FIGS. 1 and 2 does not comprise the intermediate member 50. In contrast, the composite 100 shown in FIGS. 3 to 6 comprises the intermediate member 50. FIGS. 3 to 6 exemplify an aspect in which the intermediate member 50 is arranged between the first metal member 10 and the vibration damping material 30 for convenience of explanation. However, the aspect of the composite is not limited thereto, and may an aspect in which the intermediate member 50 is arranged between the second metal member 20 and the vibration damping material 30. Specifically, in the case where when the temperature rises, the occurrence of surface distortion of the second metal member 20 is suppressed to suppress the appearance defects thereof, the vibration damping material 30 may be pressed indirectly, via the intermediate member 50, against the second metal member 20.

### 2.8.1 Aspect without Intermediate Member

The composite 100 shown in FIG. 1 has a sheet-like shape as a whole, and the composite 100 shown in FIG. 2 has a hat-like shape as a whole. The hat-like shape is, for example, a shape having a top plate part 21, a vertical wall part 22, and a flange part 23, as shown in FIG. 2. However, the shape of the composite 100 is not limited thereto. The composite bodies 100 shown in FIGS. 1 and 2 comprise a first metal member 10, a second metal member 20, and a vibration damping material 30 sandwiched therebetween. As shown in FIGS. 1 and 2, the first metal member 10 and the second metal member 20 have overlapping portions when viewed from a direction perpendicular to the surface of one metal member, and the vibration damping material 30 is sandwiched between at least a part of the overlapped portions. The vibration damping material 30 is only sandwiched between the metal members 10 and 20 and is not bonded (adhered). Specifically, in a state where there is no adhesive or the like at the interface 15 between the metal members 10 and 20 and the vibration damping material 30, the vibration damping material 30 is sandwiched between the metal members 10 and 20, whereby the metal members 10 and 20 and the vibration damping material 30 are pressed against each other. As a result, the vibration damping material 30 is not substantially constrained in the planar direction with respect to the metal members 10 and 20, and is in a pseudo-composite state due to pressing. Though FIG. 1 shows an aspect in which the vibration damping material 30 has an interface 15 between the metal members 10 and 20, the composite 100 of the present disclosure is not limited to this aspect. As illustrated below, the vibration damping material 30 has an interface 15 with at least one of the first metal member 10 and the second metal member 20, and may not be bonded at the interface 15 (adhesive or the like may not be present). An intermediate member 50, if present, may or may not be bonded at the interface 15 between the vibration damping material 30 and the metal member.

The first metal member 10 and the second metal member 20 may be bonded by an affixation member 40, as shown in FIGS. 1 and 2. By bonding the metal members 10 and 20, the structure of the composite can easily be maintained. The bonding method of the metal members 10 and 20 is not particularly limited. The affixation member 40 may be formed by adhesion or welding as well as mechanical fastening with bolts or rivets. However, from the viewpoint of process costs and applicability to existing production lines (in particular, production lines for automobile parts), mechanical fastening, welding, or a combination thereof is preferable. The number of affixation members 40 is also not particularly limited, and may be one or more.

Though not illustrated, as a method of bonding the two metal members 10 and 20, a method in which the vibration damping material 30 is pressed against the second metal member 20 by applying an external force to the first metal member 10 in the direction of the vibration damping material 30 by another member may be employed. Specifically, in a state in which the vibration damping material 30 is arranged between the first metal member 10 and the second metal member 20, by applying pressure to the first metal member 10 toward the second metal member 20 by means of an unillustrated member, the pressure is applied to the second metal member 20 via the first metal member 10 and vibration damping material 30. As a result, the vibration damping material 30 is sandwiched between the first metal member 10 and the second metal member 20 while being pressed against the second metal member 20. For example, the composite having a sheet-like shape as a whole shown in FIG. 1 may be pressed to press the vibration damping material 30 against the second metal member 20.

In the composite 100 shown in FIGS. 1 and 2, as described above, though the second metal member 20 and the vibration damping material 30 are in contact with each other under a predetermined pressing load, the second metal member 20 and the vibration damping material 30 are not bonded and are not planarly constrained to each other. As a result, in the composite 100, a predetermined vibration damping property is ensured, and internal stress is less likely to occur even when the temperature rises, whereby surface distortion is less likely to occur in the second metal member 20.

### 2.8.2 Aspect Including Intermediate Member

As shown in FIG. 3, in the composite 100, the vibration damping material 30 may be sandwiched between the first metal member 10 and the second metal member 20 via the intermediate member 50. In the composite 100 shown in FIG. 3, the intermediate member 50 is laminated (stacked) between the first metal member 10 and the vibration damping material 30. The intermediate member 50 shown in FIG. 3 is composed of a metal material and generates force (restoring force) when compressed in the stacking direction (the direction perpendicular to the surface of the metal member), to press the vibration damping material 30 against the metal member 20. When the intermediate member 50 is provided between the first metal member 10 and the vibration damping material 30 as described above, higher vibration damping performance can be expected when the second metal member 20 and the vibration damping material 30 are not bonded. However, for suppressing surface distortion on the first metal member 10 side, the second metal member 20 and the vibration damping material 30 may be bonded. The intermediate member 50 and the vibration damping material 30 may or may not be bonded together, but when they are not bonded (not constrained), the generation of internal stress can easily further be suppressed.

The intermediate member 50 shown in FIG. 3 may have a shape corresponding to the second metal member 20. For example, the intermediate member 50 may have a top plate part 51 and a vertical wall part 52 having a hat-shaped cross section. In the composite 100 shown in FIG. 3, the vibration damping material 30 is sandwiched between the top plate part 51 of the intermediate member 50 and the second metal member 20, and the first metal member 10, the intermediate member 50, and the second metal member 20 are bonded to each other by means of the affixation member 40 in the portion where the vibration damping material 30 is not arranged (the hat-shaped flange part 53 in FIG. 3). In the region where the top plate part 21 of the second metal member 20 and the top plate part 51 of the intermediate member 50 overlap, it is preferable that the distance between the second metal member 20 and the intermediate member 50 be less than the thickness of the vibration damping material 30 in the free state. As a result, pressure is applied from the top plate part 51 of the intermediate member 50 to the top plate part 21 of the second metal member 20 via the vibration damping material 30, whereby the vibration damping material 30 is pressed against the second metal member 20 and compressed.

When the intermediate member 50 is composed of a metal material, there is a possible increase in the overall weight of the composite 100, but there is an advantage in strength. When the intermediate member 50 is composed of a metal material, the material and shape thereof are not particularly limited. The intermediate member 50 composed of a metal material is preferably composed of the same material as the first and second metal members 10 and 20 from the viewpoint of matching the coefficients of thermal expansion. The intermediate member 50 may have a sheet-like portion, and in this case, the thickness of the sheet-like portion may be determined from the viewpoint of weight reduction of the composite 100 and pressing force of the vibration damping material 30. For example, when a steel sheet is used as the intermediate member 50, the thickness thereof may be, for example, 0.1 mm or more and 2.0 mm or less.

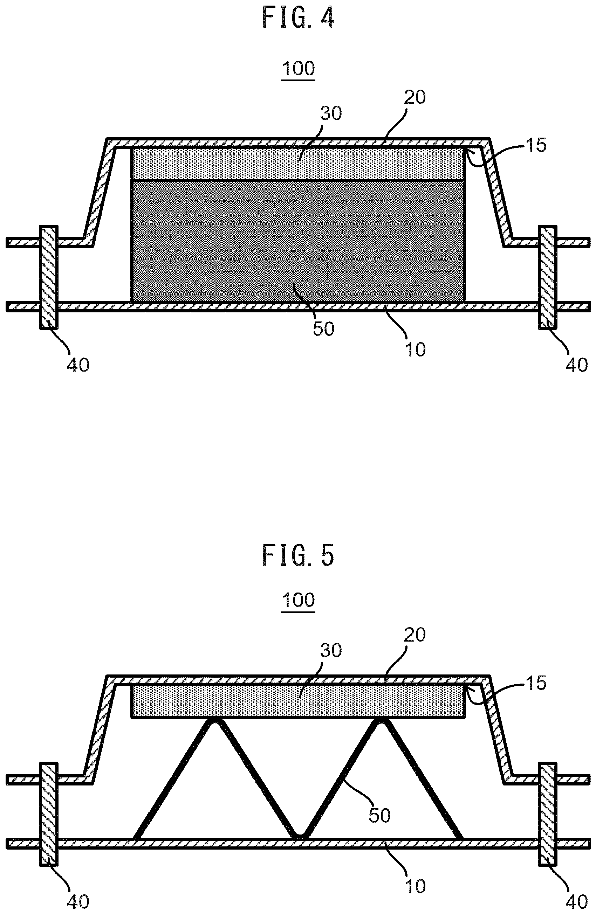

As shown in FIGS. 3 to 5, in the composite 100, the metal member forming the top surface may be the second metal member 20, the metal member forming the bottom surface may be the first metal member 10, the vibration damping material 30 may be arranged between the first metal member 10 and the second metal member 20 and in a portion where the metal members 10 and 20 overlap, and a material as the intermediate member 50, which is capable of generating force (restoring force) when compressed and which is capable of pressing the vibration damping material 30 against the second metal member 20, may be arranged between the first metal member 10 and the vibration damping material 30. Examples of the material include, in addition to the metal materials shown in FIG. 3, plastic materials, rubber materials, foam materials as shown in FIG. 4, and a leaf spring as shown in FIG. 5. In this case, the elastic force of the plastic material, rubber material, foam material or leaf spring can act to press the vibration damping material 30 against the second metal member 20. In this case, the first metal member 10 and the intermediate member 50 may or may not be bonded to each other.

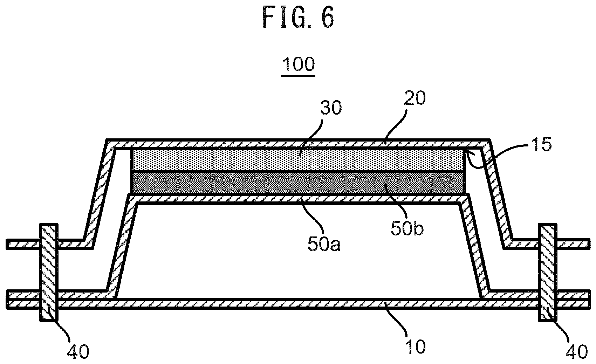

A plurality of intermediate members may be combined in the composite. For example, as shown in FIG. 6, the composite may be constructed by arranging, in this order, the first metal member 10, a metal material as an intermediate member 50a, a plastic material, a rubber material, and/or a foam material as an intermediate member 50b, a vibration damping material 30, and a second metal member 20. By combining a plurality of intermediate members in this manner, it becomes easier to hold and press the vibration damping material more appropriately in the composite, whereby the vibration damping performance can easily be improved.

Note that when the intermediate member 50 is arranged between one of the first metal member 10 and the second metal member 20 and the vibration damping material 30, the intermediate member may be in contact with one of the first metal member 10 and the second metal member 20 and may not be in contact with the other. For example, as shown in FIGS. 3 to 6, when an intermediate member 50 is arranged between the first metal member 10 and the vibration damping material 30, the intermediate member 50 may not be in contact with the second metal member 20 while being in contact with the first metal member 10. When at least one of the first metal member 10 and the second metal member 20 is hat-shaped, the intermediate member 50 is preferably not bonded to the vertical wall part (vertical wall part 22; refer to FIG. 2) of the hat-shaped metal member. The intermediate member 50 need not be in contact with the vertical wall. For example, as shown in FIGS. 3 to 6, the intermediate member 50 is preferably neither bonded to nor in contact with the vertical wall part 22 of the hat-shaped second metal member 20. As a result, the occurrence of surface distortion or the like in the vertical wall part can be suppressed.

### 3. Applications of Composite

The composite of the present disclosure can be used for any of various parts which require vibration damping performance. For example, it may be used as a part of transportation equipment such as an automobile, railroad vehicle, ship, or aircraft. Alternatively, the composite of the present disclosure may be used as a part, such as a building part, other than that of transportation equipment. Hereinafter, an automobile part including the composite of the present disclosure will be described as an example.

Examples of the automobile part include an outer part, inner part, and reinforcement part of an automobile. As used herein, "outer part" means a part facing the outside of the automobile, "inner part" means a part inside the automobile, and "reinforcement part" means a reinforcing part. Both the inner part and the reinforcement part do not constitute the outer surface of the automobile.

As described above, in the composite of the present disclosure, at least one of the first metal member and the second metal member is not bonded to the vibration damping material, whereby in portions where this vibration damping material is not bonded, surface distortion can be suppressed, and appearance defects of the composite can be suppressed. On the other hand, the metal members and the vibration damping material may be bonded in portions where appearance is not a problem (for example, portions which do not face the outside of the automobile). For example, in the automobile part of the present disclosure, at least one of the first metal member and the second metal member may be an inner or reinforcement part of an automobile. In this case, the metal members serving as the inner or reinforcement part of the automobile and the vibration damping material may or may not be bonded together. In contrast, the outer metal member of the automobile and vibration damping material should not be bonded to each other.

### 4. Composite Unit

The technology of the present disclosure also includes an aspect as a composite unit used for the composite described above. A composite unit is an intermediate product for producing the composite described above. Specifically, the composite unit of the present disclosure is used in the composite of the present disclosure, and comprises a first metal member and a vibration damping material excluding fiber-reinforced plastics, wherein the vibration damping material is arranged on at least one side of the first metal member. The details of the first metal member and the vibration damping material have already been described. For example, the first metal member may be steel.

The composite unit of the present disclosure may comprise an intermediate member, and in this case, the intermediate member may be arranged between the first metal member and the vibration damping material and on at least part of the surface of the first metal member. The intermediate member may be composed of at least one selected from a metal material, plastic material, rubber material, foam material, and leaf spring, as described above. The details of the intermediate member have already been described.

In the composite unit of the present disclosure, as described above, the first metal member may be used as an inner or reinforcement part of an automobile.

In the composite unit of the present disclosure, the vibration damping material and the intermediate member may be arranged only on one side of the first metal member, or may be arranged on both sides. In the composite unit of the present disclosure, the vibration damping material may or may not be bonded to the first metal member. The composite of the present disclosure above can be produced by, for example, pressing the vibration damping material of the composite unit against the second metal member. When the first metal member and the vibration damping material are bonded, the vibration damping material and the second metal member should not be bonded, and when the first metal member and the vibration damping material are not bonded, the vibration damping material and the second metal member may or may not be bonded. From the viewpoint of handling of the composite unit, the first metal member and the vibration damping material may be lightly adhered or lightly affixed. When an intermediate member is sandwiched therebetween, the intermediate member and the vibration damping material and/or the first metal member and the intermediate member may also be lightly adhered or lightly affixed.

### 5. Method for Production of Composite

The composite of the present disclosure can be produced by, for example, the following method. Specifically, the method for the production of the composite of the present disclosure may comprise:
a first step wherein a vibration damping material is arranged on at least one side of a first metal member to form a composite unit, and
a second step wherein the vibration damping material of the composite unit is pressed against a second metal member, wherein
in the second step, the vibration damping material may be sandwiched between the first metal member and the second metal member so that the vibration damping material is arranged in a portion where the first metal member and the second metal member overlap, whereby the composite unit and the second metal member may be combined without bonding between at least one of the first metal member and the second metal member and the vibration damping material.

### 5.1 First Step

In the first step, for example, the vibration damping material is laminated onto the surface of the first metal member to form a composite unit. The details of the first metal member, the vibration damping material, and the composite unit are as described above. For example, the first metal member may be steel. In the first step, the intermediate member may be arranged between the first metal member and the vibration damping material. Specifically, the first step may comprise arranging the intermediate member on the surface of the first metal member and arranging the vibration damping material on the intermediate member, and the intermediate member may be composed of at least one selected from a metal material, plastic material, rubber material, foam material, and leaf spring. In particular, when the intermediate member is composed of a foam material, it is possible to control the pressing load by changing the foaming ratio, whereby the vibration damping performance can easily be improved.

Furthermore, as described above, in the composite unit, each member may or may not be bonded. From the viewpoint of handling of the composite unit, the first metal member and the vibration damping material may be lightly adhered or lightly affixed, and when an intermediate member is sandwiched, the intermediate member and the vibration damping material and/or the first metal member and the intermediate member may also be lightly adhered or lightly affixed.

### 5.2 Second Step

In the second step, by interposing the vibration damping material between the first metal member and the second metal member such that the vibration damping material is arranged in a portion where the first metal member and the second metal member overlap, the composite unit and the second metal member can be composited without bonding between at least one of the first metal member and the second metal member and the vibration damping material. The details of the second metal member are as described above. For example, the second metal member may be steel. As described above, the composite of the present disclosure may comprise an intermediate member arranged between at least one of the first metal member and the second metal member and the vibration damping material. In this regard, the second step may include, after arranging an intermediate member between the second metal member and the vibration damping material, pressing the vibration damping material of the composite unit against the surface of the second metal member via the intermediate member, and the intermediate member may be composed of at least one selected from a metal material, plastic material, rubber material, foam material, and leaf spring. In particular, when the intermediate member is composed of a foam material, the vibration damping performance is likely to be improved due to the frictional resistance with the air generated in the bubbles.

Furthermore, as described above, in the composite of the present disclosure, the first metal member and the second metal member may be bonded together. Specifically, the second step may comprise bonding the first metal member and the second metal member, in a portion where the vibration damping material is not arranged, by mechanical fastening, adhesion, welding, or a combination thereof. In this case, the timing of bonding the first metal member and the second metal member is not particularly limited. For example, the second step may comprise bonding the first metal member and the second metal member after pressing the vibration damping material of the composite unit against the second metal member.

As described above, according to the technology of the present disclosure, in the composite of the metal members and the vibration damping material, high vibration damping performance is secured, and internal stress due to differences in coefficients of linear expansion between the metal members and the vibration damping material is less likely to occur. Thus, for example, even when the temperature rises, it is unlikely that the surface of the metal member will undergo surface distortion. When combining the metal members and the vibration damping material, a strong and durable adhesive is not required, and there is no need to apply heating or curing to the production line, whereby production costs can easily be reduced.

### EXAMPLES

The present invention will be further described below with reference to the Examples, but the present invention is not limited to the following Examples. In the present invention, various conditions can be adopted as long as the purpose is achieved without departing from the spirit thereof.

### 1. Preparation of Metal Members

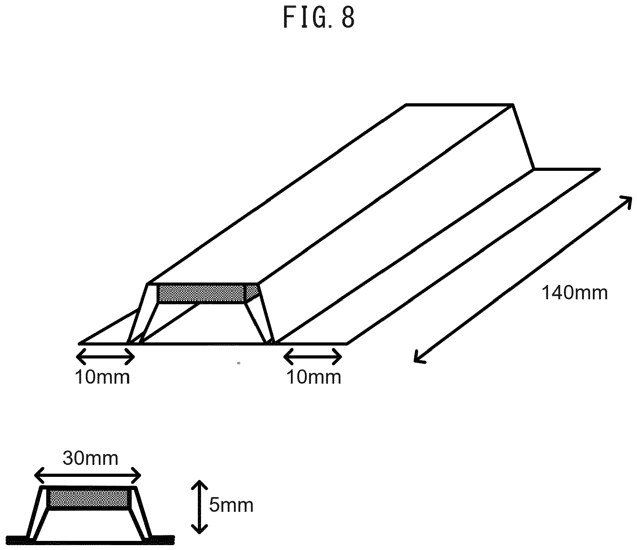

As the first metal member and the second metal member, tin-free steel sheets ("TFS0.18" manufactured by Nippon Steel Corporation; sheet thickness: 0.18 mm) were prepared. As shown in FIG. 8, for the first metal member (the lower metal member in FIG. 8), a steel sheet was used as a flat sheet itself, and for the second metal member (the upper metal member in FIG. 8), a steel sheet was bent into a hat shape and used. As shown in FIG. 8, the hat member had a vertical wall part having a height of 5 mm and a top plate part having a width of 30 mm. Note that FIG. 8 exemplifies a form in which a hat-shaped steel sheet is employed as the intermediate member, but the form of the intermediate member is not limited thereto.

### 2. Preparation of Vibration Damping Material and/or Intermediate Member

The following materials were prepared as the vibration damping material and the intermediate member sandwiched between the first metal member and the second metal member.

- Butyl rubber ("Butyl rubber sheet RBRMA1-300" manufactured by Misumi)
- Acrylic sheet (thickness: 2 mm; "2 mm (transparent) acrylic sheet" manufactured by Iwata Seisakusho)
- Hat-shaped steel sheet (sheet thickness: 0.18 mm, hat-shaped, tin-free steel sheet "TFS0.18" manufactured by Nippon Steel Corporation)
- Flat steel sheet (sheet thickness: 0.4 mm, flat sheet, hot-dip galvanized steel sheet manufactured by Nippon Steel Corporation (tensile strength 590 GPa))
- NBR rubber (acrylonitrile-butadiene rubber; "AK NBR rubber sheet" manufactured by Akitsu Kogyo Co., Ltd.)
- CR rubber (chloroprene rubber; "AK CR rubber material sheet" manufactured by Akitsu Kogyo Co., Ltd.)
- Natural rubber ("Natural rubber square sheet" manufactured by Kosha)
- EPDM rubber (ethylene-propylene-diene rubber; "EPDM non-adhesive sheet" manufactured by Wake Sangyo)
- Urethane rubber ("Urethane rubber sheet" manufactured by Wake Sangyo)
- Silicon rubber ("Silicon rubber sheet" manufactured by Wake Sangyo)
- EPR rubber ("Ethylene propylene rubber sheet EP thickness: 2 mm" manufactured by AS ONE)
- Rosin ester A-18 (manufactured by Arakawa Chemical Industries, Ltd.)
- Rosin ester AT (manufactured by Arakawa Chemical Industries, Ltd.)
- Polycarbonate sheet (thickness: 2 mm, manufactured by Iwata Seisakusho)
- PET (polyethylene terephthalate, manufactured by Iwata Seisakusho)
- Vinyl chloride sheet (thickness: 2 mm, manufactured by Iwata Seisakusho)
- α gel sheet ("θ-7" manufactured by Taica)
- Damping sheet ("VEM414" manufactured by 3M)
- BPA type epoxy resin ("YD-128" manufactured by Nippon Steel Chemical & Materials Co., Ltd.)
- Epoxy reactive diluent ("YH-300" manufactured by Nippon Steel Chemical & Materials Co., Ltd.)
- Low-resilience urethane ("EA944KD-84" manufactured by Esco)
- Leaf spring (0.5 mm thick quenched ribbon steel bent into an M shape)

### 3. Preparation of Adhesive

The adhesives used for some samples are as follows. In Table 1 below, "first adhesive" means an adhesive used between the first metal member and the vibration damping material, and "second adhesive" means the adhesive used between the second metal member and the vibration damping material.

- Fast-curing acrylic resin-based adhesive ("Cemedine Metal Lock Y600" manufactured by Cemedine)
- Epoxy-based adhesive ("Araldite" manufactured by Nichiban)
- Cyanoacrylate-based adhesive ("Aron Alpha" manufactured by Toagosei Co., Ltd.)

### 4. Production of Composite

The first metal members, the second metal members, the vibration damping materials/intermediate members, and optionally adhesives were laminated in the combinations and orders shown in Table 1 to produce composite bodies. The first metal member and the second metal member were mechanically fastened with stainless steel bolts and nuts having a screw diameter of 2 mm at portions where the vibration damping material or intermediate member was not arranged. As a result, the vibration damping material was pressed against the second metal member with or without adhesive, and was sandwiched between the two metal members. The mechanical fastening of each composite was adjusted so that the average value of the pressing load in the composite was 0.3 kg/cm². Table 1 below shows the configurations of composite bodies according to the Examples and Comparative Examples. Table 1 below also shows each configuration and the corresponding drawing number of the present application. In Table 1 below, regarding the intermediate member, "flat steel sheet/hat-shaped steel sheet", "acrylic sheet/hat-shaped steel sheet", "butyl rubber/hat-shaped steel sheet", and "natural rubber/hat-shaped steel sheet" mean, as shown in FIG. 6, "a flat steel sheet arranged on top of a hat-shaped steel sheet (on the second metal member side)", "an acrylic sheet arranged on a hat-shaped steel sheet (on the second metal member side)", "a butyl rubber arranged on a hat-shaped steel sheet (on the second metal member side)", and "a natural rubber arranged on a hat-shaped steel sheet (on the second metal member side)", respectively, were used as the intermediate member. Furthermore, "Y600/hat-shaped steel sheet" and "Araldite/hat-shaped steel sheet" mean that Y600 or Araldite were arranged as an adhesive on a hat-shaped steel sheet as an intermediate member, and the vibration damping material is laminated thereon (i.e., the vibration damping material and the intermediate member are bonded via an adhesive). In Table 1, A2/A1 means "the ratio A2/A1 of the projected area A2 of the vibration damping material to the entire projected area A1 of the portion where the first metal member and the second metal member overlap."

**[Table 1]**

| | Composite structure | | | | | | | |
|---|---|---|---|---|---|---|---|---|
| | Shape of first metal member | First adhesive | Intermediate member | Vibration damping material | Second adhesive | Shape of second metal member | A2/A1 | FIG# |
| Comp Ex 1 | Flat sheet | N/A | Hat-shaped steel sheet | N/A | N/A | Hat | 0 | - |
| Comp Ex 2 | Flat sheet | Y600 | N/A | Low resilience urethane | Y600 | Hat | 0.5 | - |
| Ex 1 | Flat sheet | N/A | Hat-shaped steel sheet | Butyl rubber | Y600 | Hat | 0.5 | 3 |
| Ex 2 | Flat sheet | N/A | Hat-shaped steel sheet | Butyl rubber | Araldite | Hat | 0.5 | 3 |
| Ex 3 | Flat sheet | N/A | Hat-shaped steel sheet | Butyl rubber | Aron alpha | Hat | 0.5 | 3 |
| Ex 4 | Flat sheet | N/A | Hat-shaped steel sheet | Acrylic sheet | Y600 | Hat | 0.5 | 3 |
| Ex 5 | Flat sheet | N/A | Flat steel sheet/hat-shaped steel sheet | Butyl rubber | Y600 | Hat | 0.5 | 6 |
| Ex 6 | Flat sheet | N/A | Hat-shaped steel sheet | NBR rubber | N/A | Hat | 0.5 | 3 |
| Ex 7 | Flat sheet | N/A | Hat-shaped steel sheet | CR rubber | N/A | Hat | 0.5 | 3 |
| Ex 8 | Flat sheet | N/A | Hat-shaped steel sheet | Natural rubber | N/A | Hat | 0.5 | 3 |
| Ex 9 | Flat sheet | N/A | Hat-shaped steel sheet | Butyl rubber | N/A | Hat | 0.5 | 3 |
| Ex 10 | Flat sheet | N/A | Hat-shaped steel sheet | EPDM rubber | N/A | Hat | 0.5 | 3 |
| Ex 11 | Flat sheet | N/A | Hat-shaped steel sheet | Urethane rubber | N/A | Hat | 0.5 | 3 |
| Ex 12 | Flat sheet | N/A | Hat-shaped steel sheet | Silicone rubber | N/A | Hat | 0.5 | 3 |
| Ex 13 | Flat sheet | N/A | Hat-shaped steel sheet | EPR rubber | N/A | Hat | 0.5 | 3 |
| Ex 14 | Flat sheet | N/A | Hat-shaped steel sheet | Rosin ester A-18 | N/A | Hat | 0.5 | 3 |
| Ex 15 | Flat sheet | N/A | Hat-shaped steel sheet | Rosin ester AT | N/A | Hat | 0.5 | 3 |
| Ex 16 | Flat sheet | N/A | Flat steel sheet/hat-shaped steel sheet | Butyl rubber | N/A | Hat | 0.5 | 6 |
| Ex 17 | Flat sheet | N/A | Acrylic sheet/hat-shaped steel sheet | Butyl rubber | N/A | Hat | 0.5 | 6 |
| Ex 18 | Flat sheet | N/A | Butyl rubber/hat-shaped steel sheet | Rosin ester A-18 | N/A | Hat | 0.5 | 6 |
| Ex 19 | Flat sheet | N/A | Butyl rubber/hat-shaped steel sheet | Rosin ester AT | N/A | Hat | 0.5 | 6 |
| Ex 20 | Flat sheet | N/A | Hat-shaped steel sheet | Acrylic sheet | N/A | Hat | 0.5 | 3 |
| Ex 21 | Flat sheet | N/A | Hat-shaped steel sheet | Polycarbonate sheet | N/A | Hat | 0.5 | 3 |
| Ex 22 | Flat sheet | N/A | Hat-shaped steel sheet | PET | N/A | Hat | 0.5 | 3 |
| Ex 23 | Flat sheet | N/A | Hat-shaped steel sheet | Vinyl chloride sheet | N/A | Hat | 0.5 | 3 |
| Ex 24 | Flat sheet | N/A | Hat-shaped steel sheet | α gel sheet | N/A | Hat | 0.5 | 3 |
| Ex 25 | Flat sheet | N/A | Hat-shaped steel sheet | VEM414 | N/A | Hat | 0.5 | 3 |
| Ex 26 | Flat sheet | N/A | Y600/hat-shaped steel sheet | Butyl rubber | N/A | Hat | 0.5 | 3 |
| Ex 27 | Flat sheet | N/A | Araldite/hat-shaped steel sheet | Butyl rubber | N/A | Hat | 0.5 | 3 |
| Ex 28 | Flat sheet | N/A | Hat-shaped steel sheet | YD-128 | N/A | Hat | 0.5 | 3 |
| Ex 29 | Flat sheet | N/A | Hat-shaped steel sheet | YH-300 | N/A | Hat | 0.5 | 3 |
| Ex 30 | Flat sheet | N/A | Natural rubber/hat-shaped steel sheet | Butyl rubber | N/A | Hat | 0.5 | 6 |
| Ex 31 | Flat sheet | N/A | Hat-shaped steel sheet | Low resilience urethane | N/A | Hat | 0.5 | 3 |
| Ex 32 | Flat sheet | N/A | Low resilience urethane | Butyl rubber | N/A | Hat | 0.5 | 4 |
| Ex 33 | Flat sheet | N/A | N/A | Low resilience urethane | N/A | Hat | 0.5 | 2 |
| Ex 34 | Flat sheet | N/A | Leaf spring | Butyl rubber | N/A | Hat | 0.5 | 5 |
| Ex 35 | Flat sheet | Y600 | N/A | Low resilience urethane | N/A | Hat | 0.5 | 2 |
| Ex 36 | Flat sheet | N/A | Hat-shaped steel sheet | NBR rubber | N/A | Hat | 0.05 | 3 |
| Ex 37 | Flat sheet | N/A | Flat steel sheet/hat-shaped steel sheet | Butyl rubber | N/A | Hat | 0.05 | 6 |

### 5. Evaluation of Vibration Damping Material and Composite

### 5.1 Static Friction Coefficient of Vibration Damping Material

The static friction coefficient of the solid vibration damping material was measured. The measurement method was as described above. The evaluation results are shown in Table 2 below.

### 5.2 Loss Coefficient of Vibration Damping Material

The loss coefficient of the solid vibration damping material at 25 °C was measured. The measurement method was as described above. The evaluation results are shown in Table 2 below.

### 5.3 Storage Modulus of Vibration Damping Material

The storage modulus of the solid vibration damping material at 25 °C was measured. The measurement method was as described above. The evaluation results are shown in Table 2 below.

### 5.4 Viscosity of Vibration Damping Material

The viscosity of the liquid vibration damping material at 25 °C was measured. The measurement method was as described above. The evaluation results are shown in Table 2 below.

### 5.5 Vibration Damping Property

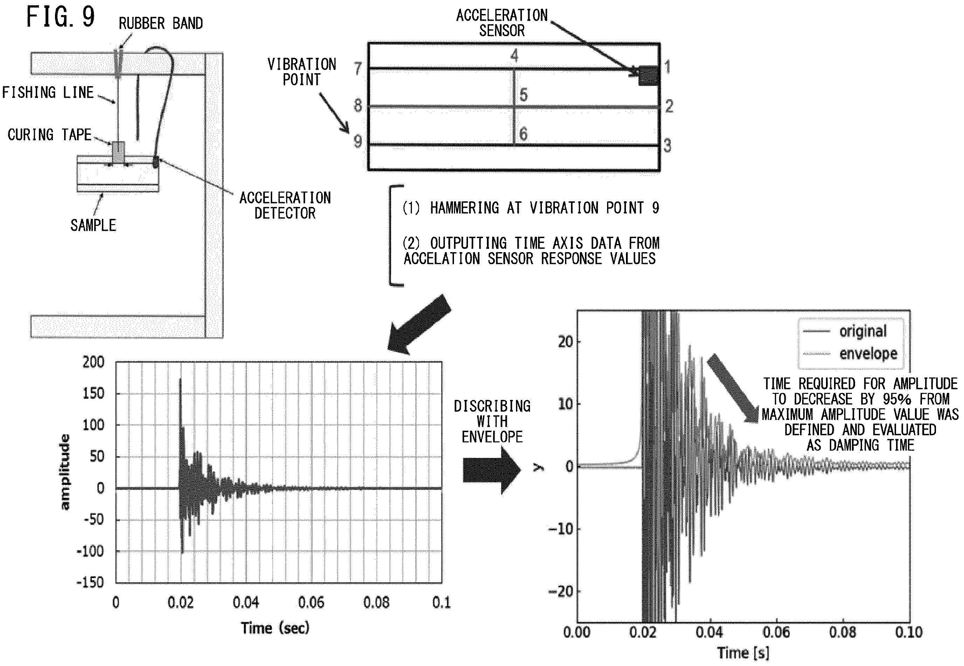

In order to evaluate the vibration damping property of a produced composite, the hanging impact vibration method was performed. Specifically, as shown in FIG. 9, a test sample was suspended from an installation stand with a fishing line, at the ninth point, the test piece was hammered, and the time axis data was output from the response value of an acceleration sensor located on a diagonal line for evaluation. An envelope was drawn on the obtained time/amplitude waveform, and the time required for the amplitude to decrease by 95% from the maximum amplitude value indicated by the envelope was defined and evaluated as the "damping time." The shorter the damping time, the better the vibration damping performance. The evaluation results are shown in Table 2 below. In Table 2 below, when the damping time was less than the damping time when nothing was sandwiched between the metal members (Comparative Example 1), it was evaluated as "Good."

### 5.6 Economic Efficiency

The economic efficiency was evaluated assuming incorporation into an automobile production line. As a premise, the cost of the process (productivity) is much higher than the cost of the material (vibration damping material, the adhesive itself). In particular, bonding to the second metal member (upper metal member) directly affects the tact time and has a very large impact on cost. On the other hand, bonding to the first metal member (lower metal member) can be incorporated into automobiles as a unit (part) of materials and steel sheets, and has little impact on the cost of automobile production lines. Thus, samples in which the second metal member was adhered were evaluated as poor in economic efficiency (Poor), samples in which the first metal member was adhered were evaluated as somewhat excellent (OK) in economic efficiency, and samples in which an adhesive was not used were evaluated as most excellent (Good) in economic efficiency. The evaluation results are shown in Table 2 below.

### 5.7 Appearance (Surface Distortion) Evaluation

Each sample, immediately after production, was heated to 150 °C under atmospheric pressure and maintained for 1 hour, and after standing to cool, the surface of the first metal member (the flat sheet portion) and the surface of the second metal member (the top sheet part of the hat-shaped member) were visually inspected for surface distortion. The confinnation method was to observe the presence or absence of distortion and irregularities from the in-plane shadow (in some cases, the distortion of the linear part of the fluorescent lamp reflected on the surface can also be observed) by applying bright light such as a fluorescent lamp. Samples in which distortion and unevenness could be observed were evaluated as having surface distortion (Poor), and those in which no distortion and no unevenness were observed were evaluated as having no surface distortion (Good). The evaluation results are shown in Table 2 below.

**[Table 2]**

| | Properties of vibration damping material | | | | Composite performance | | | | |
|---|---|---|---|---|---|---|---|---|---|
| | Static friction coefficient | Loss Coefficient | Storage modulus (MPa) | Viscosity (mPa·s) | Vibration damping property | | Cost performance | Appearance (surface distortion) | |
| | | | | | Damping time (µs) | Evaluation | | First metal member side | Second metal member side |
| Comp Ex 1 | - | - | - | - | 43.1 | Poor | Good | Good | Good |
| Comp Ex 2 | 1.78 | 0.230 | 0.0436 | - | 5.8 | Good | Poor | Poor | Poor |
| Ex 1 | 1.94 | 0.159 | 38.1 | - | 7.4 | Good | Poor | Good | Poor |
| Ex 2 | 1.94 | 0.159 | 38.1 | - | 8 | Good | Poor | Good | Poor |
| Ex 3 | 1.94 | 0.159 | 38.1 | - | 12.3 | Good | Poor | Good | Poor |
| Ex 4 | 0.47 | 0.106 | 4383 | - | 9.8 | Good | Poor | Good | Poor |
| Ex 5 | 1.94 | 0.159 | 38.1 | - | 8.1 | Good | Poor | Good | Poor |
| Ex 6 | 0.97 | 0.218 | 37.6 | - | 6.2 | Good | Good | Good | Good |
| Ex 7 | 0.68 | 0.194 | 13.3 | - | 7.5 | Good | Good | Good | Good |
| Ex 8 | 1.38 | 0.185 | 24.5 | - | 3.7 | Good | Good | Good | Good |
| Ex 9 | 1.94 | 0.159 | 38.1 | - | 4.5 | Good | Good | Good | Good |
| Ex 10 | 0.56 | 0.151 | 17.2 | - | 5.5 | Good | Good | Good | Good |
| Ex 11 | 2.69 | 0.078 | 28.1 | - | 5.2 | Good | Good | Good | Good |
| Ex 12 | 2.11 | 0.043 | 3.1 | - | 12.7 | Good | Good | Good | Good |
| Ex 13 | 19.08 | 0.043 | 108.2 | - | 6.5 | Good | Good | Good | Good |
| Ex 14 | - | - | - | 250000 | 1.4 | Good | Good | Good | Good |
| Ex 15 | - | - | - | 30000 | 8.9 | Good | Good | Good | Good |
| Ex 16 | 1.94 | 0.159 | 38.1 | - | 4.4 | Good | Good | Good | Good |
| Ex 17 | 1.94 | 0.159 | 38.1 | - | 4 | Good | Good | Good | Good |
| Ex 18 | - | - | - | 250000 | 8.3 | Good | Good | Good | Good |
| Ex 19 | - | - | - | 30000 | 8.2 | Good | Good | Good | Good |
| Ex 20 | 0.47 | 0.106 | 4383 | - | 21 | Good | Good | Good | Good |
| Ex 21 | 0.55 | 0.035 | 3387 | - | 21.1 | Good | Good | Good | Good |
| Ex 22 | 0.44 | 0.034 | 2525 | - | 20.8 | Good | Good | Good | Good |
| Ex 23 | 0.36 | 0.030 | 2804 | - | 21 | Good | Good | Good | Good |
| Ex 24 | 0.40 | 0.420 | 0.01 | - | 6.9 | Good | Good | Good | Good |
| Ex 25 | 0.36 | 0.029 | 87353 | - | 9.9 | Good | Good | Good | Good |
| Ex 26 | 1.94 | 0.159 | 38.1 | - | 10.6 | Good | OK | Good | Good |
| Ex 27 | 1.94 | 0.159 | 38.1 | - | 10.6 | Good | OK | Good | Good |
| Ex 28 | - | - | - | 12000 | 11.1 | Good | Good | Good | Good |
| Ex 29 | - | - | - | 150 | 20.9 | Good | Good | Good | Good |
| Ex 30 | 1.94 | 0.159 | 38.1 | - | 1.6 | Good | Good | Good | Good |
| Ex 31 | 1.78 | 0.230 | 0.0436 | - | 1.6 | Good | Good | Good | Good |
| Ex 32 | 1.94 | 0.159 | 38.1 | - | 1.7 | Good | Good | Good | Good |
| Ex 33 | 1.78 | 0.230 | 0.0436 | - | 11.0 | Good | Good | Good | Good |
| Ex 34 | 1.94 | 0.159 | 38.1 | - | 20.8 | Good | Good | Good | Good |
| Ex 35 | 1.78 | 0.230 | 0.0436 | - | 11.0 | Good | OK | Poor | Good |
| Ex 36 | 0.97 | 0.218 | 37.6 | - | 8 | Good | Good | Good | Good |
| Ex 37 | 1.94 | 0.159 | 38.1 | - | 5.8 | Good | Good | Good | Good |

The results shown in Table 2 reveal the following.

For Comparative Example 1, since there was no vibration damping material between the first metal member and the second metal member, the damping time was as long as 43.1 µs.

For Comparative Example 2, since between the first metal member and the second metal member, the vibration damping material was bonded to both the first metal member and the second metal member via an adhesive, the economic efficiency was poor and surface distortion occurred on both the surface of the first metal member and the surface of the second metal member when the temperature was raised.

For Examples 1 to 5, since between the first metal member and the second metal member, the vibration damping material was bonded to the second metal member via an adhesive, the economic efficiency was poor and the surface of the second metal member become distorted when the temperature was raised. However, no surface distortion occurred on the first metal member side. In this regard, Examples 1 to 5 are applicable to the case where the second metal member side is used as an inner or reinforcement part of an automobile.

For Examples 6 to 37, since the vibration damping material was sandwiched and pressed between the first metal member and the second metal member without bonding the vibration damping material to the second metal member, the economic efficiency was excellent and surface distortion on the surface of the second metal member could be suppressed even when the temperature was raised.

Though composite bodies in which the metal members are composed of predetermined materials and have predetermined shapes have been described in the Examples described above, the composite of the present disclosure is not limited to these forms. The materials and shapes of the metal members may be appropriately selected in accordance with the application of the composite.

### DESCRIPTION OF REFERENCE SIGNS

- 10: first metal member
- 20: second metal member
- 30: vibration damping material
- 40: affixation member
- 50: intermediate member
- 100: composite

## Claims

1. A composite, comprising:
a first metal member,
a second metal member, and
a vibration damping material excluding fiber-reinforced plastics, wherein
the vibration damping material is arranged in at least a part of a portion where the first metal member and the second metal member overlap and is sandwiched between the first metal member and the second metal member, and
at least one of the first metal member and the second metal member is not bonded to the vibration damping material.

2. The composite according to claim 1, comprising an intermediate member, wherein
the intermediate member is arranged between at least one of the first metal member and the second metal member and the vibration damping material, and
the vibration damping material is sandwiched between the first metal member and the second metal member via the intermediate member.

3. The composite according to claim 2, wherein
the intermediate member is composed of at least one selected from a metal material, a plastic material, a rubber material, a foam material, and a leaf spring.

4. The composite according to any one of claims 1 to 3, wherein
the vibration damping material is composed of at least one selected from a resin, a rubber material, a plastic material, and a foam material.

5. The composite according to any one of claims 1 to 4, wherein
the vibration damping material is solid, and
a static friction coefficient of the vibration damping material is 0.30 or more.

6. The composite according to any one of claims 1 to 5, wherein
the vibration damping material is solid, and
a loss coefficient of the vibration damping material at 25 °C is 0.01 or more.

7. The composite according to any one of claims 1 to 6, wherein
the vibration damping material is solid, and
a storage modulus of the vibration damping material at 25 °C is 1.0 × 10⁵ MPa or less.

8. The composite according to any one of claims 1 to 4, wherein
the vibration damping material is liquid, and
a viscosity of the vibration damping material at 25 °C is 100 mPa·s or more.

9. The composite according to any one of claims 1 to 8, wherein
the first metal member and the second metal member are steel.

10. The composite according to any one of claims 1 to 9, wherein
in portions where the vibration damping material is not arranged, the first metal member and the second metal member are bonded together.

11. The composite according to claim 10, wherein
the first metal member and the second metal member are bonded together by mechanical fastening, adhesion, welding, or a combination thereof.

12. The composite according to any one of claims 1 to 11, wherein
the interface between at least one of the first metal member and the second metal member and the vibration damping material is not bonded.

13. The composite according to any one of claims 1 to 12, wherein
a ratio A2/A1 of a projected area A2 of the vibration damping material relative to a projected area A1 of the entire overlapping portion of the first metal member and the second metal member is 0.05 or more and 1.00 or less.

14. An automobile part comprising the composite according to any one of claims 1 to 13.

15. The automobile part according to claim 14, wherein
at least one of the first metal member and the second metal member is an inner or reinforcement part of an automobile.

16. A composite unit used for the composite according to any one of claims 1 to 13, comprising:
a first metal member, and
a vibration damping material excluding fiber-reinforced plastics, wherein
the vibration damping material is arranged on at least one side of the first metal member.

17. The composite unit according to claim 16, comprising an intermediate member, wherein
the intermediate member is arranged between the first metal member and the vibration damping material and on at least a part of a surface of the first metal member, and
the intermediate member is composed of at least one selected from a metal material, a plastic material, a rubber material, a foam material, and a leaf spring.

18. The composite unit according to claim 16 or 17, wherein
the first metal member is used as an inner or reinforcement part of an automobile.

19. The composite unit according to any one of claims 16 to 18, wherein
the first metal member is steel.

20. A method for the production of the composite according to any one of claims 1 to 13, the method comprising:
a first step wherein a vibration damping material is arranged on at least one side of a first metal member to form a composite unit, and
a second step wherein the vibration damping material of the composite unit is pressed against a second metal member, wherein
in the second step, the vibration damping material is sandwiched between the first metal member and the second metal member so that the vibration damping material is arranged in a portion where the first metal member and the second metal member overlap, and the composite unit and the second metal member are combined without bonding between at least one of the first metal member and the second metal member and the vibration damping material.

21. The method for the production of a composite according to claim 20, wherein
the first step comprises arranging an intermediate member on a surface of the first metal member and arranging the vibration damping material on the intermediate member, and
the intermediate member is composed of at least one selected from a metal material, a plastic material, a rubber material, a foam material, and a leaf spring.

22. The method for the production of a composite according to claim 20 or 21, wherein
the second step comprises arranging an intermediate member between the second metal member and the vibration damping material, and thereafter pressing the vibration damping material of the composite unit against a surface of the second metal member via the intermediate member, and
the intermediate member is composed of at least one selected from a metal material, a plastic material, a rubber material, a foam material, and a leaf spring.

23. The method for the production of a composite according to claim 21 or 22, wherein
the intermediate member is composed of a foam material.

24. The method for the production of a composite according to any one of claims 20 to 23, wherein
the first metal member and the second metal member are steel.

25. The method for the production of a composite according to any one of claims 20 to 24, wherein
the second step comprises bonding the first metal member and the second metal member by mechanical fastening, adhesion, welding, or a combination thereof in a portion where the vibration damping material is not arranged.

26. The method for the production of a composite according to claim 25, wherein
the second step comprises pressing the vibration damping material of the composite unit against the second metal member, and thereafter bonding the first metal member and the second metal member.
